Europäisches Patentamt

European Patent Office

Office européen des brevets

(11) Veröffentlichungsnummer: **0 346 628 B1**

# (12) EUROPÄISCHE PATENTSCHRIFT

(45) Veröffentlichungstag der Patentschrift: **23.12.92**

(21) Anmeldenummer: **89108809.8**

(22) Anmeldetag: **17.05.89**

(51) Int. Cl.⁵: **B62J** **1/08**, B62K 19/36

(54) **Am Rahmen in Richtung auf die Hinterradachse montierte, federnde Zweirad Sattelstütze.**

(30) Priorität: **19.05.88 DE 8806577 U**

(43) Veröffentlichungstag der Anmeldung:
**20.12.89 Patentblatt  89/51**

(45) Bekanntmachung des Hinweises auf die
Patenterteilung:
**23.12.92 Patentblatt  92/52**

(84) Benannte Vertragsstaaten:
**AT BE CH DE ES FR GB GR IT LI LU NL SE**

(56) Entgegenhaltungen:
**DE-U- 8 706 953**
**FR-A- 657 016**
**FR-A- 666 858**
**FR-A- 1 020 035**
**US-A- 1 442 643**

(73) Patentinhaber: **Simic, Tino**
**St. Anton Strasse 14**
**W-4150 Krefeld(DE)**

(72) Erfinder: **Simic, Tino**
**St. Anton Strasse 14**
**W-4150 Krefeld(DE)**

EP 0 346 628 B1

## Beschreibung

TECHNISCHES GEBIET

Die Erfindung bezieht sich auf eine Vorrichtung gemäß dem ersten Teil des Patentanspruchs 1 (FR-A-66 6858) zur federnden Aufhängung des Zweirad Sattels am Fahrzeugrahmen, so daß die durch Bodenunebenheiten wirkenden Stöße nicht an die fahrende Person weitergeleitet werden können.

STAND DER TECHNIK

Eine Vielzahl von Entwürfen federnder Zweirad Sattelstützen sind seit ca. 1920 bekannt ohne daß es bis heute gelungen ist, eine federnde Zweirad Sattelstütze zu konstruieren, die ihren Anforderungen gut und kostengünstig entspricht, drel Problempunkte waren bis heute nicht zufriedenstellend gelöst:

1. DIE BEFESTIGUNG,
welche bis jetzt MEISTENS direkt IM Rahmen an Stelle der festen Sattelstütze, mit einem durch den Rahmen vorgegebenen ungünstigen Befestigungswinkel, erfolgte. Diese Winkelstellung ist, bezüglich der bei den Bodenstößen wirkenden Kräften, für gutes und leichtes Gleiten der federnden Teile, bei ihren Bewegungen ungünstig.

Auch eine VERTIKALE Befestigung, wie z.B. die Patentschrift 666,858, ist der Befestigung IN RICHTUNG AUF DIE HINTERACHSE nicht gleichzusetzen.

2. DER FEDERUNGSKOMFORT.
Die bisher immer wieder benutzten, im Inneren der federnden Sattelstützen eingebauten Schraubenfedern, hatten wegen ihrer vorgeschriebenen Baumaße, auf das jeweilige Gewicht der fahrenden Person vorgespannt, eine zu progressive Kennlinie und boten dadurch einen unbefriedigenden Federungskomfort, auch die Patentschrift 666,858, ist mit zu progressiven Federn ausgestattet und ohne die Möglickeit einer Gewichtseinstellung.

3. DIE VERHINDERUNG DER VERDREHUNG,
bei der es bis jetzt bei KEINER Sattelstütze gelungen war, eine spielfreie Verhinderung der Verdrehung zu schaffen, ohne dabei den Federungsweg und Federkomfort durch störendes Reiben der Teile miteinander zu behindern.

AUFGABE und DARSTELLUNG

Der Erfindung liegt die Aufgabe zugrunde, die zuvor genannten Schwächen und Nachteile der bekannten federnden Zweirad Sattelstützen aufzuheben und die Möglichkeit zu schaffen, auf einfache, günstige und dauerhaft-sichere Weise eine gute Federung für die fahrende Person zu ermöglichen. Diese Aufgaben der federnden Zweirad Sattelstütze, die über eine Feder gegenüber dem Rahmen abgefedert und mit Mitteln zur Verhinderung einer Verdrehung versehen ist, sind erfindungsgemäß gemäß dem Patentanspruch 1 und Vorzugsweise wie folgt gelöst :

1.) Die Befestigung,
die im allgemeinen bekannte, wegen zu großer Reibung der federnden Teile, ungünstige Befestigungungslage (Befestigung direkt im Rahmen), wird durch ein Befestigungsteil (7) gelöst.

Die federnde Sattelstütze ist über dem Befestigungsteil (7) außerhalb des Rahmens, IN GLEICHER LINIE MIT DEN WIRKENDEN KRÄFTEN der Bodenstöße von dem Hinterrad, so befestigt, daß sie bei ihrer Federungsbewegung die kleinstmögliche Reibung zwischen den federnden Teilen aufweist und dadurch den bestmöglichen Federungskomfort bietet.

2.) Der Federungskomfort,
ist entweder durch die speziell entwickelte Gasfeder oder durch eine koaxial über die Sattelstütze montierte Stahlfeder, mit großem Durchmesser, beide mit einer flachen Kennlinie, so gelöst, daß erstmals eine sehr gute Federung, unabhängig von verschiedenen Gewichten der Benutzer, in seiner vollen vorgesehenen Länge möglich ist.

Die hier beschriebene Gasfeder ist so gebaut, daß sie eine progressivere Kennlinie aufweist, als die ganz flachen Kennlinien der allgemein bekannten Gasfedern. Dies wird durch die Reduzierung des Gasvolumens auf ein Minimum erreicht, so daß bei dem vorgesehenen Arbeitsweg der Gasdruck im Innern der Feder vergleichsweise schnell ansteigt und die Gasfeder dadurch die erwünschte Kennlinie bietet.

3.) Die Verhinderung der Verdrehung,
ist durch eine speziell entwickelte Verdrehungssperre so gelöst, daß die Verdrehungskräfte auf die gegeneinander federnden Teile, über die dafür vorgesehenen Elemente, weit entfernt von der Achse der federnden Teile weggeleitet werden.

Die Verdrehungskräfte werden dann an den äußeren Enden dieser Teile in dafür vorgesehenen Drehpunkten mit Verbindungteilen aufgefangen und über diese zu einem gemeinsamen Drehschnittpunkt weitergeleitet.

In diesem Drehschnittpunkt heben sich die Verdrehungskräfte gegenseitig auf, so daß OHNE Reibungseffekt eine spielfreie Drehverhinderung geschaffen worden ist.

Die federnde Zweirad Sattelstütze ist im wesentlichen aus zwei über ein Gleitmittel ineinander geführten Rohren gebaut.

Das äußere Rohr, Führungsrohr, ist über das Befestigungsteil, außen, am Rahmen befestigt und das innere Rohr ist entweder eine speziell hierfür entwickelte Gasfeder, die mit ihrer Arbeitswelle auf dem Auflageteil des Führungsrohrs aufliegt, oder ein Rohr, das an seinem unteren Ende, über der Verstellschraube, auf einer Stahlfeder aufliegt.

Beide Federn werden dem Gewicht der fahrenden Person durch mechanische Einwirkung an der dafür vorgesehenen Verstellschraube angepaßt, bei der Gasfeder durch einen Volumenbegrenzungskolben, der das Volumen und den Gasdruck verändert und bei der Schraubenfeder durch Anpassen des Gegendrucks der Schraubenfeder auf die Sattelstütze.

Die federnde Sattelstütze ist, über das Befestigungsteil (7), starr oder in Winkellage einstellbar, über ein Rohrstück oder über die vorhandene starre Sattelstütze, am Rahmen befestigt.

Die starre Befestigung über ein Rohrstück bietet den Vorteil, eine günstige Ausführung für die Erstausstatter und die in Winkellage einstellbare Befestigung, an der vorhandenen starren Sattelstütze, den Vorteil einer günstigen Ausführung für die nachträgliche Ausstattung.

BESCHREIBUNG DER ZEICHNUNGEN :

Fig. 1
Schnitt der kompletten federnden Zweirad Sattelstütze, Ausführung mit Gasfeder, inkl. dem im Neigungswinkel verstellbaren Befestigungsteils für die Montage auf eine vorhandene einfache Sattelstütze - laut Anspruch 5
Fig. 2
Vorderansicht der verwendeten Verdrehungssperre, aus dieser Zeichnung sind alle einzelnen Teile der Verdrehungssperre in ihrer Arbeitslage und ihrer Abhängigkeit voneinander zu ersehen.
Fig. 3 u. Fig. 4
Schnitte der Befestigungsteile - laut Anspruch 6
Fig. 5
Schnitt der kompletten federnden Sattelstütze, Ausführung mit Stahlfeder, inkl. dem im Neigungswinkel verstellbaren Befestigungsteils für die Montage auf eine vorhandene einfache Sattelstütze - laut Anspruch 5
Fig. 6 u. Fig. 7
Schnitte der verwendeten Verdrehungssperre, inklusiv dem im Neigungswinkel verstellbaren Befestigungsteils auseinandergeklappt.

ZAHLEN BEZIFFERN EINZELN :

1 Führungsrohr der federnden Sattelstütze
2 Boden des Führungsrohrs bei Gasfedern
3 Arbeitswelle der Gasfeder
4 Endaufpralldämpfungsfeder
5 Gleitmittel zwischen⁻ Sattelstütze und dem Führungsrohr
6 Sattelstütze-Innenrohr = Stahlrohr oder Gasfeder
7 eine Hälfte des winkelverstellbaren Befestigungsteils
8 eine Hälfte der Befestigung der Verdrehungssperre
9 Verstellschraube zur Gewichtsanpaßung
10 Bekannte Gasfederkolben mit Richtungsventilen
11 Dichtungs- und Führungspaket der Welle (3)
12 Volumenbegrenzungskolben, welcher das Volumen der Gasfeder und damit ihren Innendruck verändert
13 Gewindeteil, der die Verstellschraube führt
14 Stahlfeder der Sattelstütze
15 vorhandene starre Sattelstütze
16 Verbindungsteile der Verdrehungssperre
17 Drehgelenke der Verdrehungssperre
18 Bodenteil der Sattelstütze für Verstellschraube
19 Rohrstück zur Rahmenbefestigung der Sattelstütze
20 Gummiring als Endaufpralldämpfung

BESTER WEG DER ERFINDUNGSAUSFÜHRUNG

Die federnde Zweirad Sattelstütze ist in ihren Ausführungen aus einfachen Einzelteilen konstruiert, dadurch kann ihre Produktion entweder zusammen mit den Zweirädern, oder auch separat erfolgen, so daß sie entweder als Erstausstattung oder auch nachträglich angebracht werden kann.

GEWERBLICHE ANWENDBARKEIT

Die Erfindung bietet den Vorteil, daß sie zum Beispiel nachträglich durch einfache Handhabung an jede bekannte Zweiradrahmenausführung anzubringen ist und somit sehr breitflächig an vielen verschiedenen Zweirädern Einsatzmöglichkeiten finden kann.

Die Neuentwicklung schafft die Möglichkeit für die Produktion einer einfachen, günstigen und dauerhaften, für den Zweiradteile und Zubehörmarkt interessanten, federnden Zweirad Sattelstütze.

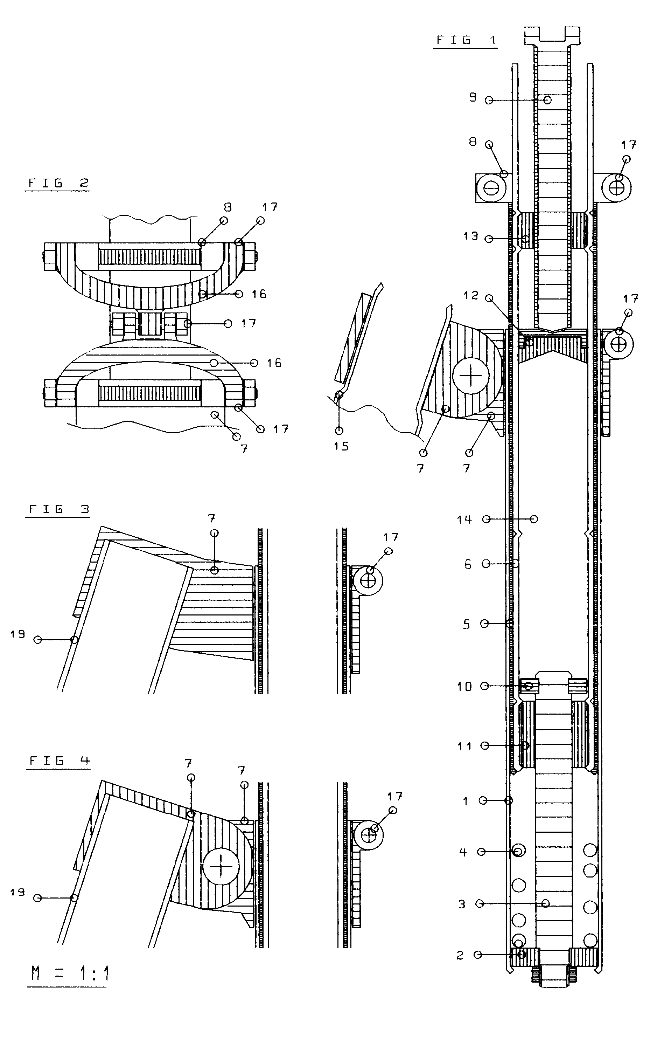

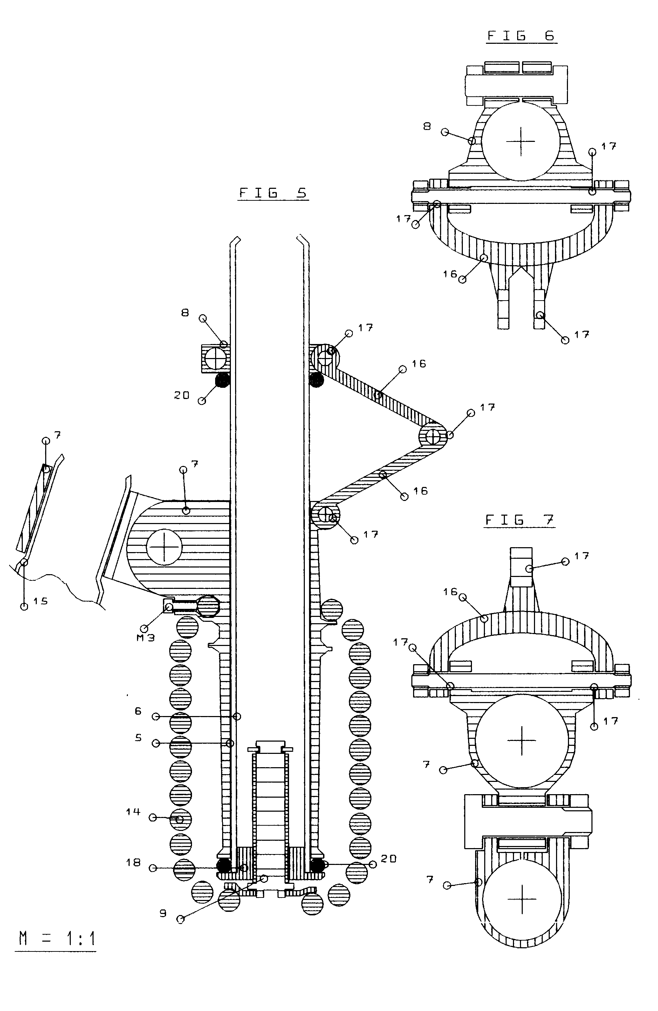

**Patentansprüche**

1. Federnde Zweirad Sattelstütze (6), deren Führungsrohr (1) außerhalb am hinteren Rahmenholmen, über ein Befestigungsteil, mit einer Neigung in RICHTUNG AUF DIE HINTERRADACHSE befestigbar ist, die im Führungsrohr (1) gegen den Druck der Feder (14) axial verschiebbar und damit gegenüber dem Rahmen abgefedert ist, DADURCH GEKENNZEICHNET, daß das Mittel zur Verhinderung des Verdrehens der Zweirad Sattelstütze (6) gegenüber dem Führungsrohr (1) aus zwei spiegelbildlich ähnlichen, gelenkig miteinander verbundenen, Gabeln (16) besteht.

2. Federnde Zweirad Sattelstütze nach Anspruch 1,
DADURCH GEKENNZEICHNET, daß die Feder (14) eine Gasfeder ist.

3. Federnde Zweirad Sattelstütze nach Anspruch 1,
DADURCH GEKENNZEICHNET, daß die Feder (14) eine Schraubenfeder ist, die, das Führungsrohr (1) koaxial umgebend, mit einem Ende am Führungsrohr (1) und mit dem anderen Ende an der Sattelstütze (6) befestigt ist.

4. Federnde Zweirad Sattelstütze nach einem der Ansprüche 1 bis 3,
DADURCH GEKENNZEICHNET, daß die Gegenkraft der Feder (14) einstellbar ist.

5. Federnde Zweirad Sattelstütze nach einem der Ansprüche 1 bis 4,
DADURCH GEKENNZEICHNET, daß das Führungsrohr (1) über ein Befestigungsteil (7) am Rahmen über die dort vorhandene starre Sattelstütze (15) an der Stelle, wo sonst der Sattel befestigt wird, befestigt ist.

6. Federnde Zweirad Sattelstütze nach einem der Ansprüche 1 bis 4,
DADURCH GEKENNZEICHNET, daß das Führungsrohr (1), über ein Befestigungsteil (7), mit einem Rohrstück (19), welches in die obere Öffnung des hinteren Rahmenholms, an der Stelle der normalen Sattelstütze eingesteckt und festgeklemmt wird, fest oder in der Winkellage zueinander einstellbar, verbunden ist.

## Claims

1. Cushioned bicycle seat pillar (6), whose guide tube (1) is mounted on the outside of the rear frame spar by means of a fixture and inclined TOWARD THE REAR WHEEL AXLE, and which is capable of axial displacement within the guide tube (1) against the pressure of the spring (14) and thus cushioned against the frame, CHARACTERIZED IN THAT the means of preventing rotation of the bicycle seat pillar (6) relative to the guide tube (1) comprise two similar, mirror-inverted forks (16) connected by a hinge.

2. Cushioned bicycle seat pillar according to Claim 1,
CHARACTERIZED IN THAT the spring (14) is a special gas spring.

3. Cushioned bicycle seat pillar according to Claim 1,
CHARACTERIZED IN THAT the spring (14) is a helical spring, coaxially wound around the guide tube (1), and fastened at one end to the guide tube (1), the other end being fastened to the seat pillar (6).

4. Cushioned bicycle seat pillar according to any of Claims 1 to 3,
CHARACTERIZED IN THAT the counterforce of the spring (14) is adjustable.

5. Cushioned bicycle seat pillar according to any of Claims 1 to 4,
CHARACTERIZED IN THAT the guide tube (1) is mounted to the frame by means of a mounting fixture (7) fastened to the existing rigid seat pillar (15) at the point at which the saddle is usually mounted.

6. Cushioned bicycle seat pillar according to any of Claims 1 to 4,
CHARACTERIZED IN THAT the guide tube (1) is connected, either rigidly or with angular adjustment capability, by means of a mounting fixture (7) to a piece of tube (19) which is inserted and clamped into the upper orifice of the rear frame spar instead of the usual saddle pillar.

## Revendications

1. Tube porte-selle de bicyclette amorti (6), dont le tube de guidage (1) est monté à l'extérieur du tube arrière du cadre au moyen d'une pièce de fixation, incliné VERS L'AXE DE ROUE ARRIERE, et qui est capable de se déplacer en direction axiale dans le tube de guidage (1) contre la pression du ressort (14), étant ainsi amorti par rapport au cadre, CARACTERISE EN CE QUE le moyen prévu pour empêcher la rotation du tube porte-selle, de bicyclette (6) par rapport au tube de guidage (1) comprend deux fourches semblables à image réfléchie (16) connectées par charnière.

2. Tube porte-selle de bicyclette amorti (6) selon Revendication 1,
CARACTERISE EN CE QUE le ressort (14) est un ressort spécial à gaz.

3. Tube porte-selle de bicyclette amorti (6) selon Revendication 1,
CARACTERISE EN CE QUE le ressort (14) est un ressort à boudin, entourant le tube de guidage (1) de manière coaxiale, et dont un bout est attaché au tube de guidage (1) et l'autre bout au tube porte-selle (6).

4. Tube porte-selle de bicyclette amorti (6) selon quelconque des Revendications 1 à 3, CARACTERISE EN CE QUE la force du ressort (14) est tarable.

5. Tube porte-selle de bicyclette amorti (6) selon quelconque des Revendications 1 à 4, CARACTERISE EN CE QUE le tube de guidage (1) est monté au cadre au moyen d'une pièce de fixation (7) attachée au tube porte-selle rigide existant (15) à l'endroit où est normalement attachée la selle.

6. Tube porte-selle de bicyclette amorti (6) selon quelconque des Revendications 1 à 5, CARACTERISE EN CE QUE le tube de guidage (1) est connecté au moyen d'une pièce de fixation (7), ou bien rigidement ou réglable en sens angulaire, à un morceau de tube (19) qui est introduit et serti dans l'orifice supérieur du tube arrière du cadre au lieu du tube porte-selle normal.

FIG 1

FIG 2

FIG 3

FIG 4

M = 1:1

FIG 6

FIG 5

FIG 7

M = 1:1